# EUROPÄISCHE PATENTSCHRIFT

(11) **EP 0 693 416 B1**
(45) Veröffentlichungstag und Bekanntmachung des Hinweises auf die Patenterteilung: **14.05.1997**
(21) Anmeldenummer: 95111042.8
(22) Anmeldetag: 14.07.1995
(51) Int. Cl.: B62D 65/00

(54) **Kraftfahrzeugmodul und Verfahren zu seiner Montage**
Module of a motor vehicle and method of its assembly
Module d'une automobile et méthode pour son assemblage

(30) Priorität: 22.07.1994 DE 4426158
(43) Veröffentlichungstag der Anmeldung: 24.01.1996
(73) Patentinhaber: ADAM OPEL AG, 65423 Rüsselsheim (DE)
(72) Erfinder: Bernhardt, Markus, Dipl.-Ing., D-65428 Rüsselsheim (DE); Hilgert, Thomas, Dipl.-Ing. (FH), D-55435 Gau-Algesheim (DE); Lange, Dirk, Dipl.-Ing., D-65428 Rüsselsheim (DE); Sobing, Dieter, Dipl.-Ing. (FH), D-65428 Rüsselsheim (DE)
(74) Vertreter: Bergerin, Ralf, Dipl.-Ing.

(56) Entgegenhaltungen:
- EP-A- 0 226 212
- WO-A-87/04680
- DE-A- 4 107 877

## Beschreibung

Die Erfindung bezieht sich auf ein Kraftfahrzeugmodul sowie auf ein Verfahren zu seiner Montage. Derzeit werden Fahrzeugbaugruppen bzw. -teile, wie ein Kraftstofftank, ein ABS-Hydrogerät, ein Hauptbremszylinder, ein Bremskraftregler, ein Kraftstoffilter oder auch Mittel zur Verdampfungskontrolle im Kraftstofftank einzeln von Werkern vorwiegend in ergonomisch ungünstiger Position Überkopf an einer hängenden Karosserie eines Kraftfahrzeuges gehaltert. Das Verschrauben dieser Elemente am Unterbau oder einer Stirnwand der Karosserie erfordert viel Zeit, wobei Schraubstellen oftmals an schwer zugänglichen Orten anzubringen sind. Anschließend werden Kraftstoff- und Bremsleitungen einzeln (oder in kleinen Gruppen zusammengefaßt) an den Unterbau der Karosserie herangeführt und dort mit den genannten Komponenten verschraubt. Die Leitungen werden in Verbindungsmittel eingeklipst, und die Verbindungsmittel werden auf Schweißbolzen der Karosserie aufgesteckt bzw. an diesen verschraubt. Auch all diese Operationen erfolgen vorwiegend in ergonomisch ungünstiger Überkopfposition. Die genannten Arbeiten am Kraftstoff- und Bremssystem des Kraftfahrzeugs müssen mit sehr hoher Qualität ausgeführt werden, da diese Systeme sicherheitsrelevant sind. Die Bedingungen bei der Montage sind der Erreichung einer guten Qualität nicht zuträglich.

Es ist Aufgabe der Erfindung, hier Abhilfe zu schaffen, indem die Arbeitsbedingungen bei der Montage von Teilen des Kraftstoff- und Bremssystems deutlich verbessert werden, was auch Verbesserungen im Bereich der Montagequalität mit sich bringt und den erforderlichen Handarbeitsaufwand verringern soll.

Zur Lösung dieser Aufgabe wurde ein Kraftfahrzeugmodul entsprechend Patentanspruch 1 und ein Verfahren zu seiner Montage, das im Patentanspruch 7 gekennzeichnet ist, geschaffen. Wesentliche weitere Einzelheiten der Erfindung sind in den Patentansprüchen 2 bis 6 sowie 8 bis 10 gekennzeichnet.

Erfindungsgemäß soll ein Kraftfahrzeugmodul auf einem Modul-Hilfsrahmen vormontiert werden, das zumindest einen Kraftstofftank sowie Kraftstoff- und Bremsleitungen umfaßt. Zusätzlich können in vorteilhafter Weise auch weitere Komponenten wie ein ABS-Hydrogerät, ein Hauptbremszylinder, ein Bremskraftregler, ein Kraftstoffilter und Mittel zur Kontrolle der Verdampfung von im Tank befindlichen Kraftstoff in das Modul mit aufgenommen werden. Alle Komponenten werden auf dem Modul-Hilfsrahmen positioniert. Die Leitungsverbindungen an den Komponenten werden in ergonomisch günstiger und übersichtlicher Arbeitsposition geschaffen, und auch die Kraftstoff- und Bremsleitungen werden exakt auf dem Hilfsrahmen positioniert. Dazu sind Verbindungsmittel vorgesehen.

Das vormontierte Kraftfahrzeugmodul wird von unten an eine Karosserie herangeführt und in einer vorbestimmten Lage an der Karosserie gehalten, was mit Hilfe an sich bekannter Zentriermittel zu realisieren ist. Anschließend werden alle im Modul enthaltenen Komponenten des Kraftstoff- und Bremssystems an der Karosserie befestigt. Dazu sind Halteelemente an den Komponenten vorgesehen. Dies können Bolzen, Bohrungen für Schrauben, Spannbänder oder Vergleichbares sein. Von Vorteil ist, wenn die Befestigung von unten, also möglichst ohne horizontal angeordnete Schrauben erfolgen kann, da diese in der Montageposition des Moduls schwieriger zu handhaben sind.

Die Verbindungsmittel, die die Kraftstoff- und Bremsleitungen untereinander verbinden, werden ebenfalls an der Karosserie (speziell ihrem Unterbau) gehaltert. Dies erfolgt, indem die Verbindungsmittel auf Schweißbolzen des Unterbaus aufgesteckt oder an diesen verschraubt werden. Es ist auch möglich, einige oder alle Verbindungsmittel am Unterbau zu verkleben. Dabei ist es von Vorteil, daß Toleranzen in der relativen Lage zwischen Unterboden und Leitungsbündel auszugleichen sind. Die Klebeverbindung ist auch reparaturfreundlicher als die Halterung der Verbindungsmittel an Schweißbolzen. Bricht ein solcher Schweißbolzen bei der Montage oder später ab und muß ersetzt werden, sind aufwendige Folgearbeiten notwendig. Klebeverbindungen können ohne nennenswerten Aufwand erneuert werden.

Sind die genannten Montageoperationen erfolgt, kann der Montage-Hilfsrahmen nach unten von der Karosserie wegbewegt werden. Anschließend sind die noch notwendigen Verbindungen zwischen Komponenten des Moduls und der Karosserie zu schaffen, und die noch freien Enden der Kraftstoff- und Bremsleitungen können angeschlossen werden.

Insgesamt sind bei der erfindungsgemäßen Verfahrensweise deutlich weniger Operationen von Werkern Überkopf auszuführen. Die vorbereiteten Arbeiten am Modul-Hilfsrahmen zur Fertigstellung des Moduls können bei optimaler Arbeitsplatzgestaltung stattfinden. Dies hat eine bedeutende Steigerung der Produktivität und eine Verbesserung der Arbeitsqualität zur Folge. Die Modul-Vormontage kann an einem beliebigen Ort nah oder fern der Hauptmontagelinie erfolgen.

Die Erfindung wird im folgenden anhand eines Ausführungsbeispiels detaillierter beschrieben. Von den zugehörigen Zeichnungen zeigt:
- Fig. 1: ein vormontiertes Kraftfahrzeugmodul auf einem Modul-Hilfsrahmen;

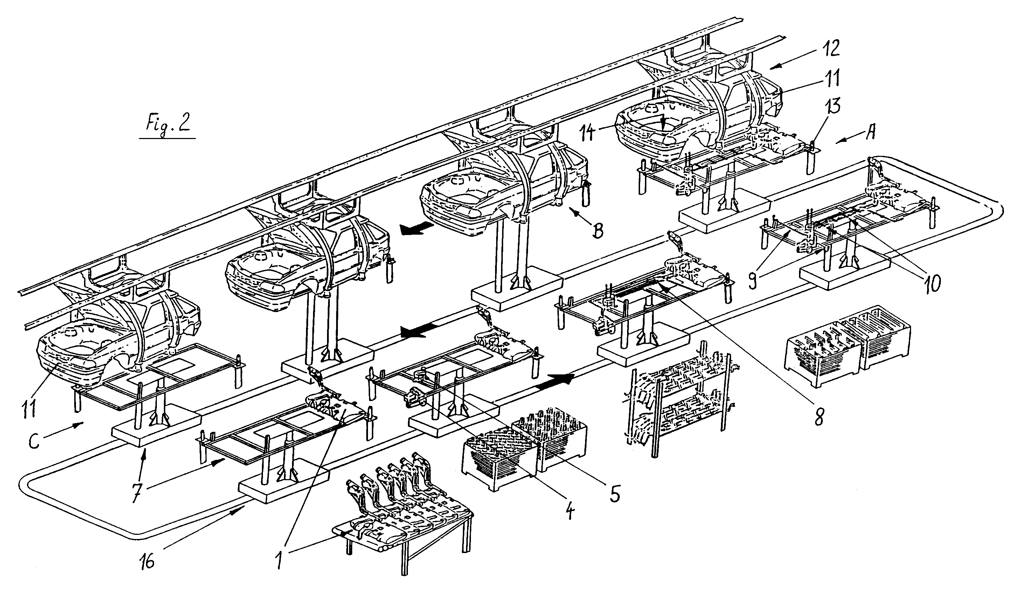

- Fig. 2: eine schematische Darstellung des Verfahrensablaufes bei der Vor- und Endmontage des Moduls nach Figur 1.

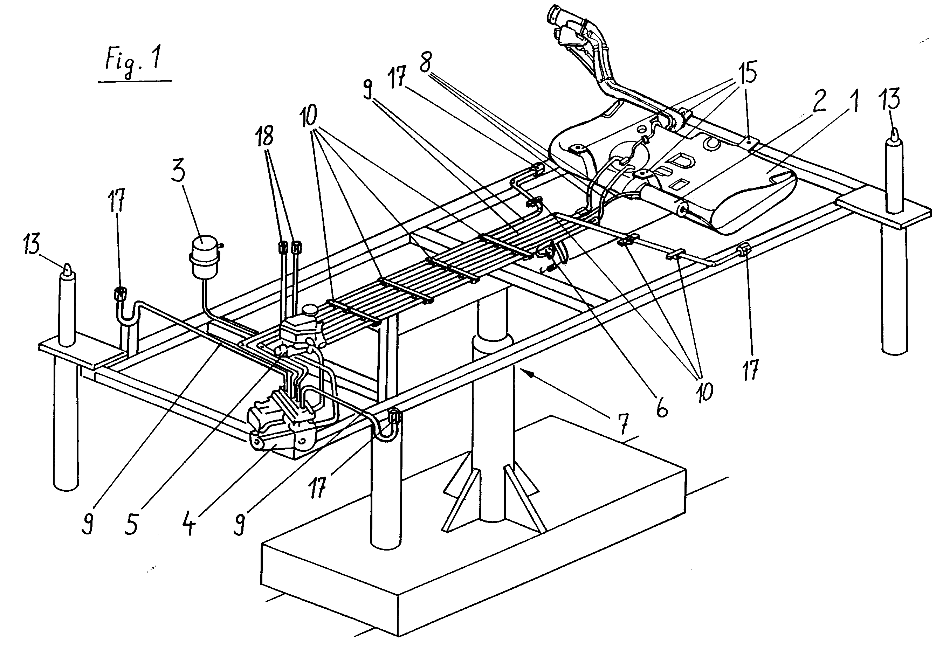

Ein in Figur 1 vorgefertigt gezeigtes Kraftfahrzeugmodul beinhaltet wesentliche Komponenten des Kraftstoff- und Bremssystems eines Kraftfahrzeuges. Dies sind ein Kraftstofftank 1, ein Kraftstoffilter 2, Mittel zur Kontrolle der Verdampfung von im Kraftstofftank 1 befindlichen Kraftstoff (Aktivkohlefilter 3), ein ABS-Hydrogerät 4, ein Hauptbremszylinder 5 und ein Bremskraftregler 6, die auf einem Modul-Hilfsrahmen 7 positioniert werden und dort im wesentlichen nur durch Wirkung ihrer Gewichtskräfte liegen. Der Hilfsrahmen 7 ist mit entsprechenden Formvertiefungen oder Aufnahmen ausgebildet. Das Kraftfahrzeugmodul besteht des weiteren aus Kraftstoffleitungen 8 und Bremsleitungen 9. Diese sind an den genannten Komponenten angeschlossen. Im mittleren Modulbereich sind die Kraftstoff- und Bremsleitungen 8, 9 zu einem Leitungsbündel zusammengefaßt. Hier sind spezielle Verbindungselemente 10 vorgesehen, über die die Leitungen 8, 9 in einer relativ zueinander vorbestimmten Position gehalten werden. Im Beispiel sind die Leitungen 8, 9 in die Verbindungselemente 10 eingeklipst. Die Verbindungselemente 10 sind exakt auf dem Modul-Hilfsrahmen 7 positionierbar, indem sie lösbar auf nicht gezeigten Zapfen des Hilfsrahmens 7 aufgesteckt sind. Alle Schraubverbindungen zwischen den Leitungen 8, 9 und den genannten Aggregaten des Kraftstoff- und Bremssystems sind gut einseh- und erreichbar herzustellen. Da es sich um Leitungen 8, 9 handelt, die später unter einem Kraftfahrzeug im wesentlichen in horizontaler Richtung verlaufen, sind auch die meisten Leitungsanschlüsse horizontal ausgerichtet. Diese sind hier von Werkern wesentlich besser montierbar, als bei der bisher bekannten Überkopfarbeit. Das fertiggestellte Modul wird mit Hilfe des Hilfsrahmens 7 unter eine Kraftfahrzeugkarosserie 11 verfahren (Position A), die sich auf einer Hauptmontagelinie 12 befindet. Anschließend kann das Modul durch Anheben des Modul-Hilfsrahmens 7 von unten an den Unterboden der Karosserie 11 herangeführt werden (Position B). Um eine genaue Zuordnung des Moduls zur Karosserie 11 zu erreichen, weist der Hilfsrahmen 7 Zentriermittel 13 auf, die als Zentrierzapfen 13 ausgebildet sind und sich in Bohrungen der Karosserie 11 abstützen.

In der Modulposition B befinden sich alle Leitungen 8, 9 und Komponenten des Kraftstoff- und Bremssystems, die zum Modul gehören, nahe bzw. in ihrer Montageposition an der Kraftfahrzeugkarosserie 11. Durch die Aufwärtsbewegung des Moduls ragen einige Elemente bis in einen Motorraum 14 des zu montierenden Fahrzeugs. Spannbänder 15 des Kraftstofftanks 1 sowie nicht näher bezeichnete Halteelemente des Aktivkohlefilters 3 (zur Verdampfungskontrolle im Kraftstofftank 1), des ABS-Hydrogerätes 4, des Hauptbremszylinders 5 sowie des Bremskraftregler 6 werden an der Karosserie 11 verschraubt. Der Kraftstoffilter 2 ist direkt am Kraftstofftank 1 gehaltert und nicht gesondert zu befestigen.

Die Verbindungselemente 10, die die Kraftstoff- und Bremsleitungen 8, 9 positionssicher fixieren, sind im Anschluß am Unterboden der Karosserie 11 zu befestigen. Sie sind derart in den Hilfsrahmen 7 eingelegt, daß sie nur leicht angehoben werden müssen und sich dann in ihrer richtigen Montageposition am Unterbau befinden. Beim Anheben werden sie entweder selbstsichernd auf Schweißbolzen des Unterbodens aufgesteckt, an diesen verschraubt, oder sie werden am Unterboden verklebt. Dies ist in den Zeichnungen nicht detailliert gezeigt.

Nachdem diese Arbeiten erfolgt sind, kann der Modul-Hilfsrahmen 7 nach unten von der Karosserie 11 wegbewegt (Position C) und auf einer Nebenmontagelinie 16 wieder bestückt werden. Jetzt können, falls erforderlich, noch weitere Verbindungen zwischen Elementen des Moduls und der Karosserie 11 geschaffen werden. Dies könnten beispielsweise solche Verbindungen sein, bei deren Schaffung der Modul-Hilfsrahmen 7 vorher räumlich gestört hat. Alle Verbindungen sollten im wesentlichen in vertikaler Richtung angelegt sein, d. h. daß Schrauben oder Muttern vertikal verschraubt werden sollten und Steckverbindungen durch vertikale Bewegung der festzulegenden Elemente erfolgen sollten. Solche Verbindungen sind mit einfachen Werkzeugen am besten in einer ergonomisch günstigen Position zu schaffen. Wenn erforderlich, sollten horizontal ausgerichtete Verbindungen erst dann hergestellt werden, wenn sich der Modul-Hilfsrahmen 7 nicht mehr unter der Karosserie 11 befindet. Erst dann sind auch freie Enden der Kraftstoff- und Bremsleitungen 8, 9 an die entsprechenden Baugruppen anzuschließen. Beispielsweise sind Anschlüsse 17 der Bremsleitungen 9 an später zu montierende Radbremszylinder bzw. Bremsschläuche und Anschlüsse von Kraftstoffleitungen 8 an den ebenfalls im weiteren Montageverlauf einzubauenden Motor anzuschließen.

Insgesamt ist das erfindungsgemäße Kraftfahrzeugmodul auf der Nebenmontagelinie 16 wesentlich schneller und qualitativ hochwertiger zu montieren, als dies bei Montage der einzelnen Komponenten in Überkopfarbeit möglich war. Durch Änderungen am Modul-Hilfsrahmen 7 ist schnell und mit geringem Aufwand auf konstruktive Änderungen am Fahrzeug zu reagieren. Welche Komponenten des Kraftstoff- und Bremssystems in das Modul aufgenommen werden, ist von der Fahrzeugkonstruktion abhängig. Diese sollte derart erfolgen, daß möglichst viele Elemente als Modul vormontiert werden können, wenige Leitungen 8, 9 durch Öffnungen des Unterbaus geführt werden müssen und Verbindungen möglichst senkrecht ausgerichtet sind.

## Patentansprüche

1. Kraftfahrzeugmodul, **dadurch gekennzeichnet**, daß es zumindest aus miteinander in Verbindung stehenden Kraftstoffleitungen (8), Bremsleitungen (9) und einem Kraftstofftank (1) besteht.

2. Kraftfahrzeugmodul nach Anspruch 1, **dadurch gekennzeichnet**, daß es zusätzlich ein ABS-Hydrogerät (4) und/oder einen Hauptbremszylinder (5) und/oder einen lastabhängigen Bremskraftregler (6) und/oder einen Kraftstoffilter (2) und/oder Mittel (3) zur Kontrolle der Verdampfung von im Kraftstofftank (1) befindlichen Kraftstoff (Aktivkohlefilter (3)) beinhaltet.

3. Kraftfahrzeugmodul nach den Ansprüchen 1 und 2, **dadurch gekennzeichnet**, daß der Kraftstofftank (1) und gegebenenfalls das ABS-Hydrogerät (4), der Hauptbremszylinder (5), der Bremskraftregler (6), der Kraftstoffilter (2) sowie die Mittel (3) zur Verdampfungskontrolle Halteelemente (15) zur Befestigung an einer Fahrzeugkarosserie (11) aufweisen.

4. Kraftfahrzeugmodul nach den Ansprüchen 1 bis 3, **dadurch gekennzeichnet**, daß die Kraftstoff- und Bremsleitungen (8, 9) durch Verbindungselemente (10) in einer relativ zueinander vorbestimmten Position gehalten werden.

5. Kraftfahrzeugmodul nach den Ansprüchen 1 bis 4, **dadurch gekennzeichnet**, daß die Verbindungselemente (10) an einem Unterboden der Fahrzeugkarosserie (11) zu haltern sind, was durch Aufstecken, Verschrauben und/oder Kleben erfolgt.

6. Kraftfahrzeugmodul nach den Ansprüchen 1 bis 5, **dadurch gekennzeichnet**, daß die Verbindungselemente (10) Aufnahmen zur Positionierung in einem Modul-Hilfsrahmen (7) aufweisen.

7. Verfahren zur Montage des in den Ansprüchen 1 bis 6 gekennzeichneten Kraftfahrzeugmoduls, **dadurch gekennzeichnet**, daß der Kraftstofftank (1), die Kraftstoffleitungen (8), die Bremsleitungen (9) sowie gegebenenfalls das ABS-Hydrogerät (4), der Hauptbremszylinder (5), der Bremskraftregler (6), der Kraftstoffilter (2) und die Mittel (3) zur Verdampfungskontrolle in dem Modul-Hilfsrahmen (7) positioniert werden, wobei die Verbindungselemente (10) zur Festlegung der Kraftstoff- und Bremsleitungen (8, 9) zu nutzen sind, anschließend die erforderlichen Leitungsverbindungen herzustellen sind und daß der Modul-Hilfsrahmen (7) mit dem fertigen Modul von unten an die Karosserie (11) herangeführt wird, wobei das Modul dann an der Karosserie (11) zu befestigen ist.

8. Verfahren zur Montage des Kraftfahrzeugmoduls nach Anspruch 7, **dadurch gekennzeichnet**, daß alle Schraub-, Steck- oder Klebeverbindungen zwischen dem Modul und der Karosserie (11) bei im wesentlichen vertikaler Bewegung von Schrauben bzw. der miteinander zu verbindenden Elemente erfolgen.

9. Verfahren zur Montage des Kraftfahrzeugmoduls nach den Ansprüchen 7 und 8, **dadurch gekennzeichnet**, daß der Modul-Hilfsrahmen (7) über Zentriermittel (13) in eine vorbestimmte Position bezüglich der Karosserie (11) überführbar ist, wobei die Zentriermittel (13) vor Erreichen einer Montageposition (B) des Modul-Hilfsrahmens (7) in Öffnungen der Karosserie (11) eingreifen bzw. Zapfen der Karosserie (11) umschließen.

10. Verfahren zur Montage des Kraftfahrzeugmoduls nach den Ansprüchen 7 bis 9, **dadurch gekennzeichnet**, daß der Modul-Hilfsrahmen (7) nach erfolgter Halterung des Moduls an der Karosserie (11) im wesentlichen vertikal nach unten von der Karosserie (11) wegbewegt wird und anschließend weitere Schraubverbindungen zwischen dem Modul und der Karosserie (11) bei im wesentlichen horizontaler Bewegung von Schrauben hergestellt werden.

## Claims

1. Motor vehicle module, characterised in that it consists at least of fuel pipes (8), brake pipes (9) and a fuel tank (1) connected to each other.

2. Motor vehicle module according to claim 1, characterised in that it contains in addition a hydraulic anti-skid system (4) and/or a master brake cylinder (5) and/or a load-dependent brake pressure regulator (6) and/or a fuel filter (2) and/or means (3) for monitoring evaporation of fuel which is in the fuel tank (1) (activated carbon filter (3)).

3. Motor vehicle module according to claims 1 and 2, characterised in that the fuel tank (1) and if occasion arises the hydraulic anti-skid system (4), the master brake cylinder (5), the brake pressure regulator (6), the fuel filter (2) as well as the means (3) for monitoring evaporation comprise retaining elements (15) for attachment to a vehicle body (11).

4. Motor vehicle module according to claims 1 to 3, characterised in that the fuel and brake pipes (8, 9) are held by connecting elements (10) in a position predetermined relative to each other.

5. Motor vehicle module according to claims 1 to 4, characterised in that the connecting elements (10) are to be mounted on an underbody of the vehicle body (11), which takes place by pushing on, bolting and/or gluing.

6. Motor vehicle module according to claims 1 to 5, characterised in that the connecting elements (10) comprise receptacles for positioning in a module auxiliary frame (7).

7. Method for assembly of the motor vehicle module characterised in claims 1 to 6, characterised in that the fuel tank (1), the fuel pipes (8), the brake pipes (9) as well as if occasion arises the hydraulic anti-skid system (4), the master brake cylinder (5), the brake pressure regulator (6), the fuel filter (2) and the means (3) for monitoring evaporation are positioned in the module auxiliary frame (7), wherein the connecting elements (10) are to be used to fix the fuel and brake pipes (8, 9), then the necessary pipe connections are to be made, and in that the module auxiliary frame (7) with the finished module is moved from below up to the body (11), wherein the module is then to be attached to the body (11).

8. Method for assembly of the motor vehicle module according to claim 7, characterised in that all the bolted, pushed-on or glued connections between the module and the body (11) are made with essentially vertical movement of bolts or of the elements to be connected to each other.

9. Method for assembly of the motor vehicle module according to claims 7 and 8, characterised in that the module auxiliary frame (7) can be transferred by centring means (13) to a predetermined position relative to the body (11), wherein the centring means (13) before reaching an assembly position (B) of the module auxiliary frame (7) engage in openings of the body (11) or surround pins of the body (11).

10. Method for assembly of the motor vehicle module according to claims 7 to 9, characterised in that the module auxiliary frame (7) after mounting of the module on the body (11) has taken place is moved essentially vertically downwards away from the body (11) and then further bolted joints are made between the module and the body (11) with essentially horizontal movement of bolts.

## Revendications

1. Module de véhicule automobile, caractérisé par le fait qu'il est formé au moins de conduites de carburant (8), de conduites de frein (9) et d'un réservoir (1) à carburant liées les unes aux autres.

2. Module de véhicule automobile selon la revendication 1, caractérisé par le fait qu'il comprend en plus un appareil (4) hydraulique de système ABS et/ou un maître-cylindre (5) de frein et/ou un correcteur (6) de force de freinage en fonction de la charge et/ou un filtre (2) à carburant et/ou des moyens (3) de contrôle de l'évaporation du carburant présent dans le réservoir (1) à carburant (filtre à charbon actif (3)).

3. Module de véhicule automobile selon les revendications 1 et 2, caractérisé par le fait que le réservoir (1) à carburant comprend et le cas échéant l'appareil (4) hydraulique de système ABS, le maître-cylindre (5) de frein, le correcteur (6) de force de freinage, le filtre (2) à carburant ainsi que les moyens (3) de contrôle de l'évaporation du carburant présentent des éléments de fixation (15) pour leur fixation sur une carrosserie (11) de véhicule.

4. Module de véhicule automobile selon les revendications 1 à 3, caractérisé par le fait que les conduites de carburant et de frein (8, 9) sont tenues dans une position relative prédéterminée les unes par rapport aux autre au moyen d'éléments de liaison (10).

5. Module de véhicule automobile selon les revendications 1 à 4, caractérisé par le fait que les éléments de liaison (10) sont destinés à être fixés sur un dessous de caisse de la carrosserie (11) de véhicule, par enfichage, par vissage et/ou par collage.

6. Module de véhicule automobile selon les revendications 1 à 5, caractérisé par le fait que les éléments de liaison (10) présentent des logements pour le positionnement dans un faux-châssis (7) de module.

7. Procédé pour le montage du module de véhicule automobile selon les revendications 1 à 6, caractérisé par le fait que l'on positionne le réservoir (1) à carburant, les conduites de carburant (8), les conduites de frein (9) avec le cas échéant l'appareil (4) hydraulique de système ABS, le maître-cylindre (5) de frein, le correcteur (6) de force de freinage, le filtre (2) à carburant ainsi que les moyens (3) de contrôle de l'évaporation du carburant sur le faux-châssis (7) de module, les éléments de liaison (10) pour tenir les conduites de carburant et de frein (8, 9) étant utilisés, à la suite de quoi on réalise les connexions de conduites nécessaires et par le fait que l'on approche de la carrosserie (11), par le dessous, le faux-châssis (7) de module avec le module terminé et on fixe le module à la carrosserie (11).

8. Procédé pour le montage du module de véhicule automobile selon la revendication 7, caractérisé par le fait que toutes les liaisons par vissage, par enfichage ou par collage entre le module et la carrosserie (11) sont réalisées avec un déplacement essentiellement vertical de vis et des éléments à lier les uns aux autres.

9. Procédé pour le montage du module de véhicule automobile selon les revendications 7 et 8, caractérisé par le fait que le faux-châssis (7) de module peut être amené dans une position prédéterminée par rapport à la carrosserie (11) à l'aide de moyens de centrage (13), les moyens de centrage (13), avant d'atteindre une position de montage (B) du faux-châssis (7) de module, pénétrant dans des ouvertures de la carrosserie (11) ou entourant des axes de centrage sur la carrosserie (11).

10. Procédé pour le montage du module de véhicule automobile selon les revendications 7 à 9, caractérisé par le fait qu'après fixation du module sur la carrosserie (11) on éloigne sensiblement verticalement vers le bas le faux-châssis (7) de module de la carrosserie (11) puis on réalise des liaisons supplémentaires par vis entre le module et la carrosserie (11) avec un déplacement essentiellement horizontal des vis.
